(19) **Europäisches Patentamt**

**European Patent Office**

**Office européen des brevets**

(11) **EP 1 176 705 B1**

(12) **EUROPEAN PATENT SPECIFICATION**

(45) Date of publication and mention
of the grant of the patent:
**09.07.2003   Bulletin 2003/28**

(51) Int Cl.⁷: **H02M 1/00**

(21) Application number: **00830540.1**

(22) Date of filing: **28.07.2000**

(54) **Low consumption converter directly connectable to the mains**

Direkt an das Netz anschliessbarer Umwandler mit niedrigem Verbrauch

Convertisseur de bas consommation directement connectable au secteur

(84) Designated Contracting States:
**DE FR GB IT**

(43) Date of publication of application:
**30.01.2002   Bulletin 2002/05**

(73) Proprietor: **STMicroelectronics S.r.l.**
**20041 Agrate Brianza (Milano) (IT)**

(72) Inventors:
• **Gattavari, Giuseppe**
**21052 Busto Arsizio (IT)**
• **Adragna, Claudio**
**20052 Monza (IT)**

(74) Representative: **Pellegri, Alberto et al**
**c/o Società Italiana Brevetti S.p.A.**
**Piazza Repubblica, 5**
**21100 Varese (IT)**

(56) References cited:
**DE-A- 19 805 373       US-A- 5 600 549**
**US-A- 5 726 871       US-A- 5 757 166**
**US-A- 5 903 138       US-A- 5 960 207**
**US-A- 6 043 633**

## Description

FIELD OF THE INVENTION

The invention relates in general to converters, adapters, battery chargers and similar circuits, and more specifically to a method of driving a low consumption converter directly connectable to the mains.

BACKGROUND OF THE INVENTION

Power supplies are generally constituted by a DC-DC converter coupled to the mains through one or several stages. In a PWM switching converter, a square wave drives the control terminal of a power switch determining its conductive or not conductive state. The output voltage is increased by increasing the duration of the phase of conduction of the switch, and decreased by increasing the duration of the phase of no conduction; thus the output voltage is controlled by varying the duty cycle of the driving square wave.

When the power switch is a MOS transistor, a non negligible amount of power is spent to charge periodically the gate of the switching transistor. Power dissipation increases with the increase of the switching frequency in a measure that sensibly affects the overall efficiency of the converter. In particular, such a power dissipation lowers the efficiency of the converter especially when the load is relatively small. For this reason, present day devices implement a lowering of the switching frequency when supplying a relatively small load.

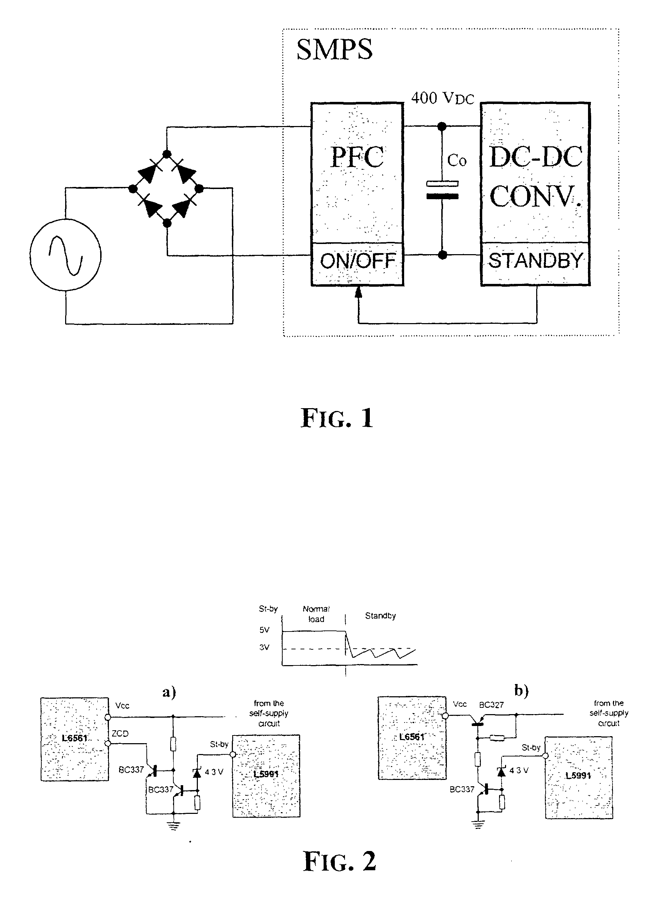

In the following description reference will be made to a two stage converter, as the one depicted in Fig. 1, because of its far greater diffusion than other types of converters, though the considerations that are made equally apply, *mutatis mutandis*, even to a converter with a number of stages greater than two.

A two stage converter may be constituted by, as illustrated in Fig. 1, a rectifier coupled to the mains, a power factor pre-regulating circuit PFC (Power Factor Corrector) supplied with the rectified mains voltage and producing a DC voltage of a certain nominal value and a DC-DC converter, input with the DC voltage of nominal value, controlling a load. The DC-DC converter may be based on a control scheme of any suitable kind (PWM, quasi resonant, resonant, etc.).

A well known solution to reduce energy consumption under relatively small or null load conditions, consists in reducing the switching frequency of the switches of the PFC stage or of the DC-DC stages, separately.

US Pat. No. 5,903,138 discloses a switching regulator that manages a low load condition by alternating continuously and in many different ways the following four operating conditions:

a) both the PFC and the converter are on;
b) the PFC is off and the converter is on;

c) the PFC is on and the converter is off;
d) both the PFC and the converter are off.

The switching regulator may change its operating condition even while the load being supplied is constant.

US Pat. No. 5,960,207 shows a switching regulator that has a main power converter stage and an external controller connected to the load that generates a signal for disabling the power factor correction converter when the power supply is operating in a low power mode.

This controller, which is directly connected to the load, must isolate mutually the circuit of the load from the power factor controller.

Even if the energy saving that can be obtained with these expedients is not negligible, the energy consumption remains conspicuously large in case of systems that remain for a long time in a stand-by state or supplying a relatively small load.

OBJECT AND SUMMARY OF THE INVENTION

It has been found and is the object of the invention a converter and/or a method for driving a converter, that allow for a considerable reduction of power dissipation when the load is smaller than a certain threshold. The invention allows the realization of power supplies fully meeting the European energy saving provisions set forth by CEMEP relating to energy consumption under small load conditions.

More precisely an object of the present invention is a converter, directly connectable to the mains, comprising a rectifier of the network voltage, a pre-regulating circuit, supplied with the rectified network voltage and producing a DC voltage of a certain nominal value, a DC-DC converter that is input with the nominal DC voltage and produces a pre-established DC voltage on an output node, and a sensing circuit that produces a signal representative of the load currently supplied by the converter for eventually disabling said pre-regulating circuit. An essential feature is the presence of a control circuit receiving as an input the signal representative of the current load level and generating a disabling signal for as long as the load does not exceeds a pre-established value.

In general, a converter provided with the above mentioned control circuit, can be driven according to a method that comprises the steps of sensing the level of load currently being supplied, comparing the sensed load with a pre-established threshold and generating the above mentioned disabling signal as long as the load remains lower than said pre-established threshold.

A preferred embodiment of the converter of the invention includes a pre-regulating circuit comprising a power factor correction circuit that is supplied with the rectified network voltage and receives at an input a signal representative of the nominal DC voltage and producing a correction signal, a power driver supplied with the rectified network voltage and receiving at an input a driving signal and the correction signal and producing said nominal DC voltage if the driving voltage is disabled and a drive control circuit producing the driving signal if the voltage on an input node thereof is null.

In such a power supply the drive control circuit can be simply realized by functionally coupling a comparator, that produces the disabling signal if the signal representative of the load surpasses a pre-established threshold, to a switch, driven by the disabling signal, that electrically isolates or connects to a reference voltage the input node of the driving circuit.

Further embodiments of the supply of the invention are defined in claims 3 and 4. The driving method of the invention is defined in claim 5.

BRIEF DESCRIPTION OF THE DRAWINGS

The different aspects and advantages of the invention will become more evident through a detailed description of the invention with reference to the attached drawings wherein:

**Figure 1** is a basic diagram of a two stage converter of the invention;
**Figure 2** depicts two possible embodiments of the invention;
**Figure 3** is a block diagram of the L6561 device of Fig. 2;
**Figure 4** is a block diagram of the L5991 device of Fig. 2.

DESCRIPTION OF SEVERAL EMBODIMENTS OF THE INVENTION

The converter of the invention shows an enhanced performance in terms of energy saving than comparable known converters, because when the DC-DC converter detects a relatively low load, the PFC pre-regulating circuit is automatically set to a low consumption (quiescent) condition. On the contrary when the load increases, the PFC resumes its normal functioning, outputting the required power and voltage.

By turning off the PFC, the voltage on the bulk capacitor Co that couples the PFC to the converter, is reduced from the value of the regulated voltage to the much lower rectified and filtered network voltage. In consideration of the fact that the leakage current of the capacitor increases when the applied voltage increases, approximately according to the following formula:

$$I_{leak} \leq 0.02 * C(\mu F)* V_R(V) + 15\mu A$$

the turning off of the PFC results in a reduction of the self-consumption of the capacitor, and thus in a further energy saving. Moreover, the reduction of the voltage onto the capacitor Co, thus reducing the voltage supplied to the converter, allows a reduction of the switching losses of the converter and of the PFC, caused by parasitic elements.

Only for example purposes, a two stage converter as the one shown in Fig. 1 is considered.

The driving method of the invention substantially consists in detecting the level of load being supplied, disabling the PFC pre-regulating circuit each time the load drops below a certain pre-established threshold and enabling the PFC preregulating circuit functioning when the load reaches and/or exceeds the threshold.

A converter of the invention can be realized with a common DC-DC converter by detecting the load level, providing a signal representative of the current load condition to a stand-by control circuit that drives an on/off circuit controlling the functioning of the PFC pre-regulating stage of the converter. The disabling on/off signal input to the PFC stage of the converter can be generated within the DC-DC converter itself or by any external circuit detecting the power being delivered to the load.

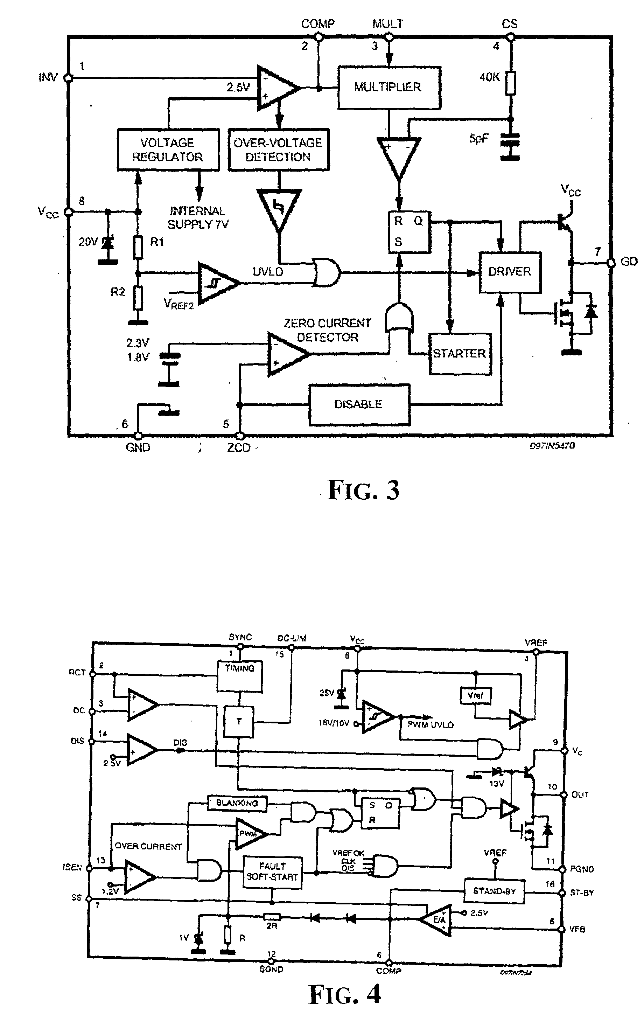

Two possible embodiments of the invention conveniently using commercially available PFC pre-regulating circuit and DC-DC converter, respectively the devices L6561 and L5991 of STMicroelectronics, are shown in Fig. 2. The block diagrams of the two commercial devices are depicted in Fig. 3 and Fig. 4, respectively.

The device L6561 is essentially constituted by a voltage regulator VOLTAGE_REGULATOR supplied with the rectified network voltage Vcc and receiving at its input INV a signal representative of the nominal DC voltage produced by the pre-regulator, by a power driver DRIVER supplied with the voltage Vcc and driven by a driving circuit DISABLE, disabling the driver if the voltage on the node ZCD is null.

In this case, it is sufficient to connect the node ZCD to ground to disable the device L6561, for example by the control circuit depicted in Fig. 2a between the two commercially available devices.

The transistor **1.a** is coupled to the zener diode and acts as a comparator producing, on the base of transistor **1.b**, a null collector-emitter voltage if the voltage on the node ST-BY is equal to or greater than 5V, or a voltage suitable to set in conduction state the transistor **1.b** if on ST-BY a voltage lower than 5V is present. Such a collector-emitter voltage represents the disabling signal. The transistor **1.b** is a switch driven by the disabling signal that connects or disconnects to ground the node ZCD of the L6561 device.

An alternative way of turning off the device L6561 may be that of disconnecting it from the supply line in the way shown in Fig. 2b. In this second embodiment the switch driven by the disabling signal couples the device L6561 to the VCC line.

The commercial device L5991, whose block diagram is depicted in Fig. 4, is provided with a logic circuit regulating the PWM driving signal that receives on the input node ISEN a signal representing the current delivered to the load, on the node SC a duty-cycle regulation signal and on the node RCT a clock signal.

The device L5991 is also provided with a driver to the output nodes OUT and PGND of which is coupled the output bridge circuit, and with a stand-by circuit STAND-BY producing a selection signal on the node ST-BY, in order to reduce the frequency of the external oscillator that generates the clock signal to a minimum value whenever the load drops below a certain pre-established threshold.

Such a stand-by circuit is commonly present in several other commercially available converters, for reducing the switching losses when the load is relatively low.

The improved converter of the invention can be simply realized by inputting to any of the control circuits of Fig. 2 the selection signal that is already generated within these commercially available converters as a signal representative of the level of load.

**Claims**

1. A converter directly connectable to the mains comprising

    a rectifier stage of the network voltage,
    a power factor correction pre-regulating circuit (PFC) supplied with the rectified network voltage and producing a DC voltage of a certain nominal value,
    a DC-DC converter, supplied with said DC voltage of a certain nominal value and a clock signal generated by an external oscillator and whose frequency is changed between at least two distinct values in function of a selection signal (ST-BY), producing a pre-established DC voltage on an output node, comprising a stand-by circuit (STAND-BY) producing said selection signal in function of the output current, and
    a control circuit input with said selection signal (ST-BY) and generating a disabling signal of said power factor corrector pre-regulating circuit when said selection signal (ST-BY) sets the frequency of the oscillator at its minimum value.

2. The converter of claim 1, wherein said power factor correction pre-regulating circuit comprises

    a correction circuit that receives at an input a signal representing the desired nominal DC voltage and produces a correction signal,
    a power driver supplied with the rectified network voltage and receiving as input a drive signal and said correction signal, producing said nominal DC voltage if said drive signal is disabled,

a drive circuit producing said drive signal if the voltage on an input node thereof is null,

    **characterized in that** it further comprises

    a comparator producing the disabling signal if the signal representative of the level of load exceeds said pre-established threshold;
    a switch driven by said disabling signal that electrically isolates or connects to a reference voltage said input node of the drive control circuit.

3. The converter according to claim 1 wherein said control circuit comprises

    a comparator producing said disabling signal if the signal representative of the load exceeds a certain threshold;
    a switch driven by said disabling signal electrically connecting or disconnecting said power factor correction pre-regulating circuit to the output of said rectifier stage.

**Patentansprüche**

1. Direkt mit dem Netz verbindbarer Umwandler mit

    einer Gleichrichterstufe für die Netzspannung,
    einem Leistungsfaktor-Korrektur-Vorregulierungskreis (PFC), welcher mit der gerichteten Netzspannung gespeist wird und eine Gleichspannung eines bestimmten Nennwerts erzeugt,
    einem Gleichspannungswandler, welcher mit der Gleichspannung eines bestimmten Werts und einem Taktsignal gespeist wird, das von einem externen Oszillator erzeugt wird und dessen Frequenz zwischen wenigstens zwei verschiedenen Werten als Funktion eines Auswahlsignals (ST-BY) geändert wird, welcher eine vorbestimmte Gleichspannung an einem Ausgangsknoten erzeugt und einen Bereitschaftskreis (STAND-BY) umfasst, der das Auswahlsignal als Funktion des Ausgangsstroms erzeugt, und
    einem Steuerkreis, dem das Auswahlsignal (ST-BY) zugeführt wird und ein Sperrsignal des Leistungsfaktor-Korrektur-Vorregulierungskreises erzeugt, wenn das Auswahlsignal (ST-BY) die Frequenz des Oszillators auf ihren minimalen Wert einstellt.

2. Umwandler von Anspruch 1, wobei der Leistungsfaktor-Korrektur-Vorregulierungskreis umfasst:

    einen Korrekturkreis, der an einem Eingang ein die gewünschte Nenngleichspannung darstellendes Signal empfängt und ein Korrektursignal erzeugt,

einen mit der gerichteten Netzspannung gespeisten und als Eingangssignal ein Antriebssignal und das Korrektursignal empfangenden Leistungstreiber, der die Nenngleichspannung erzeugt, wenn das Treibersignal gesperrt wird,

einen Antriebskreis, der das Antriebssignal erzeugt, wenn die Spannung an einem Eingangsknoten hiervon Null ist,

**dadurch gekennzeichnet, dass** er ferner umfasst:

einen Vergleicher, der das Sperrsignal erzeugt, wenn das den Lastwert darstellende Signal die vorbestimmte Schwelle übersteigt;

einen von dem Sperrsignal gesteuerten Schalter, der den Eingangsknoten des Antriebssteuerkreises von einer Bezugsspannung elektrisch isoliert oder damit verbindet.

3. Umwandler von Anspruch 1, wobei der Steuerkreis umfasst:

einen Vergleicher, der das Sperrsignal erzeugt, wenn das die Last darstellende Signal eine bestimmte Schwelle übersteigt;

einen von dem Sperrsignal gesteuerten Schalter, der den Leistungsfaktor-Korrektur-Vorregulierungskreis mit dem Ausgang der Gleichrichterstufe elektrisch verbindet oder trennt.

**Revendications**

1. Convertisseur pouvant être directement connecté au secteur comprenant :

un étage de redressement de la tension de réseau,

un circuit de pré-régulation de correction du facteur de puissance (PFC) alimenté par la tension de réseau redressée et produisant une tension continue de valeur nominale déterminée,

un convertisseur continu/continu, alimenté par ladite tension continue de valeur nominale déterminée et par un signal d'horloge produit par un oscillateur externe et dont la fréquence varie entre au moins deux valeurs distinctes en fonction d'un signal de sélection (ST-BY), produisant une tension continue prédéterminée sur un noeud de sortie, comprenant un circuit de repos (STAND-BY) produisant ledit signal de sélection en fonction du courant de sortie, et

un circuit de contrôle ayant pour entrée ledit signal de sélection (ST-BY) et produisant un signal d'invalidation dudit circuit de pré-régulation de correction du facteur de puissance lorsque le signal de sélection (ST-BY) amène la fréquence de l'oscillateur à sa valeur minimum.

2. Convertisseur selon la revendication 1, dans lequel ledit circuit de pré-régulation de correction du facteur de puissance comprend :

un circuit de correction recevant sur une entrée un signal représentant la tension continue nominale souhaitée et produisant un signal de correction,

un amplificateur de puissance alimenté par la tension de réseau redressée et recevant en entrée un signal de commande et ledit signal de correction, produisant la tension continue nominale souhaitée si le signal de commande est invalidé,

un circuit de commande produisant ledit signal de commande si la tension sur un noeud d'entrée de celui-ci est nulle, **caractérisé en ce qu'**il comprend en outre :

un comparateur produisant le signal d'invalidation si le signal représentatif du niveau de charge dépasse un certain seuil ;

un commutateur commandé par ledit signal d'invalidation qui isole de, ou connecte électriquement à, une tension de référence ledit noeud d'entrée du circuit de commande.

3. Convertisseur selon la revendication 1, dans lequel ledit circuit de commande comprend :

un comparateur produisant ledit signal d'invalidation si le signal représentatif de la charge dépasse ledit seuil ;

un commutateur commandé par ledit signal d'invalidation connectant ou déconnectant électriquement ledit circuit de pré-régulation de correction du facteur de puissance et la sortie dudit étage de redressement.

FIG. 1

FIG. 2

**FIG. 3**

**FIG. 4**